# FASCICULE DE BREVET EUROPEEN

(11) **EP 0 758 810 B1**
(45) Date de publication et mention de la délivrance du brevet: **22.09.1999**
(21) Numéro de dépôt: 96401656.2
(22) Date de dépôt: 25.07.1996
(51) Int. Cl.: H02G 9/02, H02G 9/00

(54) **Matériau composite pour la protection d'objets enterres, procédé de protection de câbles de transport d'électricité au moyen dudit matériau et ensemble de câbles correspondant**
Verbundmaterial zum Schutz von ins Erdreich verlegten Gegenständen, Verfahren zum Schutz von elektrischen Energiekabeln mittels des genannten Materials und entsprechende Zusammenlegung von Kabeln
Composite material for protecting buried objects, process for protecting electrical power cables by means of said material and corresponding cable assembly

(30) Priorité: 10.08.1995 FR 9509718
(43) Date de publication de la demande: 19.02.1997
(73) Titulaire: Compagnie Française des Silices et des Sables de Nemours "SIFRACO" Société Anonyme, F-75008 Paris (FR); Puig, José, 82110 Lauzerte (FR); Leflaive, Etienne, F-92330 Sceaux (FR)
(72) Inventeur: Boucher, Jean, 33450 Saint Sulpice et Cameyrac (FR); Rimaudiere, Laurent, 79170 Brioux sur Boutonne (FR); Puig, José, 82110 Lauzerte (FR)
(74) Mandataire: Peuscet, Jacques

(56) Documents cités:
- FR-A- 2 706 695

## Description

La présente invention concerne un matériau composite pour la protection d'objets enterrés et son utilisation pour la protection de câbles de transport d'électricité enterrés.

Les câbles électriques permettant le transport de l'électricité, notamment sous moyenne tension, ont généralement un revêtement en matière plastique comme le polyéthylène ; un transport de courant triphasé sous moyenne tension est généralement effectué au moyen de trois câbles de phase ayant un diamètre d'environ 40 mm et d'un câble neutre ayant un diamètre d'environ 10 mm, le câble neutre étant généralement mis en place entre les trois câbles de phase. Cet ensemble de câbles est enterré dans une tranchée ayant généralement une largeur d'environ 30 cm et une profondeur d'environ 80 cm ; il n'est pas possible de remblayer la tranchée avec la terre de déblai qui, du fait des cailloux qu'elle contient, risquerait d'abîmer le revêtement des câbles ; on remplit donc la tranchée avec du sable, ce qui génère un coût élevé pour la mise en place de la ligne de transport d'électricité, d'autant plus que les déblais doivent être évacués. L'utilisation du sable pour le remblayage présente l'avantage de favoriser l'échange thermique des câbles avec l'extérieur : on connaît en effet l'importance de ce transfert thermique sur le plan du rendement de l'exploitation, la température de surface des câbles due à l'effet Joule limitant la puissance électrique transportable par les câbles.

Dans la demande de brevet français FR-A-2 706 695, on a déjà proposé un dispositif de protection pour câbles électriques enterrés. Ce dispositif comprend deux nappes de textile délimitant un espace interne rempli d'un matériau particulaire ayant des propriétés de transfert thermique analogues à celles du sol, les deux nappes de textile étant celles d'un textile à double paroi, ces deux nappes étant reliées entre elles par une pluralité de fils transversaux de liaison ; le textile à double paroi ainsi rempli de matériau particulaire forme un matelassage. Comme matériau particulaire, on a proposé le sable, ce qui permet de bénéficier d'une bonne capacité de refroidissement des câbles dans le sol. Le matelassage ainsi créé permet de remblayer les tranchées au moyen des matériaux de déblai sans risque de détérioration des câbles qui sont protégés par ledit matelassage. Néanmoins, on a constaté que pour les transports électriques sous moyenne tension, par exemple sous 20 KV, le système décrit dans la demande de brevet français précitée présente quelques inconvénients : en effet, l'ensemble de câbles présente extérieurement les surfaces des trois câbles de phase et les rayons de ces câbles étant faibles, à savoir environ 20 mm, le matelassage ne peut épouser la surface externe desdits câbles car, compte-tenu du textile double paroi utilisé, il a une épaisseur minimum d'environ 15 mm, ce qui entraîne la formation de plis sur sa face interne ; ces plis nuisent au transfert thermique entre les câbles et le sable et réduisent par conséquent les performances de ce dispositif de protection. Par ailleurs, compte-tenu du coût du textile double paroi utilisé pour la réalisation du matelassage et compte-tenu de l'épaisseur minimum nécessaire pour assurer la protection, on aboutit à un coût de réalisation relativement élevé, peu compétitif par rapport au simple remplissage de la tranchée avec du sable.

La présente invention a pour but de remédier aux inconvénients précités et de proposer un nouveau matériau utilisable pour la protection d'objets enterrés, ce matériau ayant des propriétés de transfert thermique analogues à celles du sol et ayant un prix de revient beaucoup plus réduit que celui du matelassage décrit dans la demande de brevet français FR-A-2 706 695. Selon l'invention, on propose un matériau de protection qui est également constitué d'une association textile/sable, mais dans lequel le textile est une nappe de non-tissé formée de fibres relativement grosses, nappe dont une face est revêtue d'une feuille de rétention constituée par un textile tissé ou un film, la nappe de non-tissé étant chargée d'un matériau particulaire tel que du sable, notamment siliceux ; le non-tissé a une rigidité propre et il existe un espacement moyen entre les fibres qui est suffisant pour la pénétration du matériau particulaire, la feuille de rétention ayant pour but d'éviter que ledit matériau particulaire ne s'échappe par gravité lorsqu'il a été mis en place dans la nappe de non-tissé.

La présente invention a, en conséquence, pour objet un matériau composite souple pour la protection d'objets enterrés ayant des propriétés de transfert thermique analogues à celles du sol, caractérisé par le fait qu'il comporte :
a) une nappe de non-tissé de fibres naturelles et/ou synthétiques ayant une épaisseur comprise entre 8 et 25 mm sous 2 kPa et un poids compris entre 500 g/m² et 2 500 g/m², les fibres constitutives du non-tissé ayant un diamètre compris entre 50 et 500 µm et une longueur comprise entre 10 et 100 mm ;
b) une feuille de rétention constituée d'un matériau pris dans le groupe formé par :
   i) un tissé de bandelettes ou de fils de 150 à 2 200 dtex, ce tissé étant constitué de fibres naturelles et/ou synthétiques,
   ii) un non-tissé et
   iii) un film,
   ladite feuille de rétention ayant un poids compris entre 80 et 200 g/m² et étant fixée sur une face de ladite nappe par tout moyen approprié ;
c) une charge particulaire de remplissage ayant des propriétés de transfert thermique analogues à celles du sol et ayant une dimension moyenne D de particules inférieure à 1 000 µm, D étant choisi suffisamment faible pour que la charge puisse remplir la nappe de non-tissé par pénétration gravitaire, notamment sous vibrations, à partir de sa face non recouverte par ladite feuille de rétention et suffisamment grand pour qu'elle ne puisse pas, de façon significative, traverser ladite feuille de rétention au cours du remplissage de ladite nappe ;
d) une couche de fermeture mise en place au moins du côté de la nappe qui n'est pas adjacent à la feuille de rétention.

Dans une première variante de réalisation, la couche de fermeture est mise en place grâce à une imprégnation au moins superficielle de la nappe au moyen d'un agent de liaison générant une liaison entre les fibres de la nappe munie de sa charge de remplissage. Selon une autre variante, la couche de fermeture comporte un feuillet fibreux qui peut être constitué par une partie repliée de la feuille de rétention ; le feuillet fibreux peut être collé sur les fibres de surface de la nappe ; le collage du feuillet fibreux sur la nappe peut s'effectuer par pré-encollage dudit feuillet suivi d'une application du feuillet pré-encollé sur la nappe avec une légère pression et/ou un apport de chaleur.

Selon un mode préféré de réalisation, la charge particulaire est choisie dans le groupe formé par le sable, les silicates, les micas, les billes d'argile et les billes de verre ; on préfère le sable.

Selon une première variante, la charge particulaire de remplissage contient de l'argile et l'agent de liaison est de l'eau, auquel cas la couche de fermeture s'étend sensiblement sur toute l'épaisseur de la nappe ; selon une autre variante, l'agent de liaison est un liant, qui peut être choisi dans le groupe formé par le bitume ou une résine sous forme d'émulsion, la bentonite sous forme de suspension ou une colle naturelle ou synthétique ; un tel liant peut être mis en place par pulvérisation ou aspersion de la nappe de non-tissé comportant sa charge particulaire de remplissage et, dans ce cas, la couche de fermeture n'est généralement réalisée qu'au voisinage d'une face de la nappe, donc sur une épaisseur inférieure à celle de la nappe. La mise en place du liant peut s'effectuer en deux temps, à savoir d'une part, l'aspersion au moyen d'un matériau polymérisable et d'autre part, ensuite, l'aspersion au moyen d'un catalyseur de polymérisation.

Lorsque la couche de fermeture comporte un feuillet fibreux, tel qu'un non-tissé, un tissé ou un papier, ledit feuillet fibreux peut être constitué de fibres naturelles ou synthétiques et avoir, de préférence, un grammage compris entre 20 et 200 g/m². Un tel feuillet fibreux est alors fixé sur la nappe de non-tissé par tout moyen approprié, par exemple par collage. Cependant, dans le cas où l'agent de liaison est constitué d'un liant mis en place superficiellement, de façon répartie, sur la nappe, ledit liant peut jouer le rôle de moyen de fixation du feuillet fibreux en même temps que son rôle générateur de liaisons entre les fibres de la nappe pour le blocage de la charge de remplissage à l'intérieur de ladite nappe. L'utilisation d'un feuillet fibreux permet de réduire la quantité d'agent de liaison à mettre en place par unité de surface et il a, en outre, l'avantage de résoudre les problèmes de bords pour chaque élément de matériau composite fabriqué. En effet, si l'on fabrique une plaque ou une bande de matériau composite selon l'invention, les bords de l'élément fabriqué ont tendance à laisser s'échapper la charge particulaire mise en place dans la nappe ; lorsque le matériau composite comporte un feuillet fibreux, on peut replier ledit feuillet sur les bords de l'élément fabriqué et le fixer, par exemple par collage, sur lesdits bords, ce qui évite toute fuite de la charge particulaire de remplissage et facilite, de ce fait, une manipulation mécanisée de l'élément fabriqué en vue de son utilisation.

On peut avantageusement prévoir que la feuille de rétention soit fixée à une face de la nappe de non-tissé par aiguilletage ou collage. La cohésion des fibres de la nappe de non-tissé peut être assurée par aiguilletage. Lorsque la feuille de rétention est un film, sa solidarisation avec la nappe de non-tissé peut néanmoins être effectuée par aiguilletage, auquel cas le film est perforé par l'aiguilletage mais les perforations étant obstruées par les fibres du non-tissé, la feuille de rétention peut néanmoins jouer complètement son rôle.

Pour réaliser le matériau selon l'invention, on fabrique un produit textile intermédiaire constitué par une nappe de non-tissé comportant sur une de ses faces une feuille de rétention solidarisée avec elle et on dispose ce produit textile intermédiaire sur une table, éventuellement vibrante, la feuille de rétention se trouvant au-dessous de la nappe de non-tissé. On remplit alors la nappe de non-tissé avec la charge particulaire de remplissage en versant celle-ci, de façon répartie, sur la face supérieure de la nappe de non-tissé ; le matériau particulaire est ensuite bloqué in situ par mise en place de la couche de fermeture.

L'invention a également pour objet un procédé de protection de câbles électriques enterrés, caractérisé par le fait que l'on entoure les câbles à protéger d'un matériau, tel que ci-dessus défini.

La présente invention a enfin pour objet un ensemble de câbles électriques enterrés protégé extérieurement contre les chocs au moyen d'une enveloppe, caractérisé par le fait que ladite enveloppe est constituée par un matériau tel que ci-dessus défini, sous forme d'un ruban refermé autour des câbles dans sa largeur.

Le matériau de protection ci-dessus défini est d'une fabrication plus simple et donc plus économique que le matelassage défini dans la demande de brevet français FR-A-2 706 695 ; le coût est encore réduit par le fait que la nappe de non-tissé est plus économique qu'un textile double paroi. Par ailleurs, le matériau particulaire est beaucoup mieux bloqué dans la nappe de non-tissé que dans le tissu double paroi. Il en résulte que la résistance aux chocs, qui est désirée pour le matériau de protection à utiliser autour des câbles électriques, peut être obtenue avec une épaisseur moindre : au lieu d'un matelassage de 15 mm, il suffira d'un matériau composite selon l'invention d'une épaisseur de 10 mm environ ; cette réduction d'épaisseur entraîne simultanément une réduction de poids d'un tiers et donc une diminution des coûts de transport. En outre, la réduction d'épaisseur permet de stocker, sur un touret de poids donné, une longueur 1 fois et demie plus grande avec le matériau selon l'invention. Enfin, la réduction d'épaisseur du matériau de protection entraîne une flexibilité plus grande dudit matériau, cette flexibilité étant d'ailleurs favorisée par la structure de non-tissé de la nappe qui retient le matériau particulaire ; il en résulte un meilleur contact thermique du matériau de protection avec les câbles électriques puisqu'on évite les plis de la face du matériau qui vient en appui sur la surface externe des câbles ; en outre, dans la zone de creux existant entre deux câbles de phase d'un même ensemble de câbles, le matériau selon l'invention peut former une concavité qui le rapproche de l'ensemble de câbles, étant entendu que, selon une variante, on peut mettre en place un matériau particulaire, tel que du sable siliceux, à l'intérieur du volume défini par le matériau composite, dans les interstices entre les câbles.

Grâce à la mise en oeuvre de l'invention, il n'est plus nécessaire de déverser du sable en vrac dans la tranchée pratiquée pour la mise en place d'une ligne de transport électrique ; on peut, de plus, faire une tranchée moins large, par exemple de 15 cm au lieu de 30 cm ; en effet la largeur des tranchées faites jusqu'ici prend en compte, par mesure de sécurité, l'éventualité d'un reste de cailloux et/ou d'une déformation des parois au cours de la pose ; on peut également réduire, par exemple de quelques centimètres, la profondeur de ladite tranchée puisque l'ensemble de câbles, protégé selon l'invention, peut être déposé directement sur le fond même de la tranchée. L'ensemble de câbles protégé selon l'invention comporte donc un matériau composite souple mis en place autour d'une pluralité de câbles préréunis, cet ensemble ayant une section de forme générale triangulaire dont le matériau de protection qui entoure les câbles est réalisé en un seul panneau à bords jointifs ou à bords recouvrants.

Le matériau composite selon l'invention peut aussi être utilisé pour protéger des objets enterrés autres que des câbles électriques tels que, par exemple, des citernes, des réservoirs, des canalisations pour le stockage ou le transport d'eau, de gaz, de produits pétroliers ou analogues. Le matériau selon l'invention peut enfin être utilisé comme moyen de filtration, par exemple pour la récupération des eaux pluviales.

Pour mieux faire comprendre l'objet de l'invention, on va en décrire maintenant, à titre d'exemple purement illustratif et non limitatif, un mode de mise en oeuvre représenté sur le dessin annexé.

Sur ce dessin :
- la figure 1 représente en coupe une nappe de matériau composite selon l'invention ;
- la figure 2 représente, en coupe transversale, un ensemble de câbles d'une ligne de transport électrique triphasé protégée selon l'invention au moyen d'un ruban du matériau composite de la figure 1 ;
- la figure 3 représente, en coupe transversale, une tranchée pour la mise en place de l'ensemble de câbles protégé de la figure 2.

En se référant au dessin, on voit que l'on a désigné par 1 dans son ensemble le matériau composite souple selon l'invention. Ce matériau 1 est constitué d'une nappe de non-tissé 2 et d'une feuille de tissé 3 qui recouvre l'une des faces de la nappe 2.

La nappe 2 est constituée de fibres de polypropylène ou de polyéthylène de 300 dtex ayant un diamètre d'environ 170-180 µm. On rappelle qu'une fibre de 1 tex est une fibre pesant 1 gramme/km ; il en résulte qu'une fibre de 300 dtex est une fibre pesant 30 grammes/km. La nappe de non-tissé 2 pèse 1 000 grammes/m² et a une épaisseur de 12 mm sous 2 kPa (surpression relative créée par une plaque posée sur la nappe). La cohésion de cette nappe est obtenue par aiguilletage. La longueur des fibres de la nappe 2 est d'environ 50 mm.

La feuille de rétention 3 est un tissé de bandelettes de polypropylène de 200 dtex, ce tissé ayant un poids de 100 grammes/m². La feuille de rétention 3 est fixée sur la nappe 2 par collage.

Lorsque ce produit textile composite est réalisé, on le met en place sur une table éventuellement vibrante, la feuille de rétention 3 étant au contact avec ladite table, et on verse de façon répartie un sable siliceux, dont les particules ont un diamètre moyen compris entre 50 et 200 µm ; on charge la nappe 2 de sable à raison d'environ 15 000 grammes/m², le sable ne traversant pas la feuille de rétention 3. La feuille de rétention 3 déborde de chaque côté de la nappe 2 et est ensuite repliée et collée sur la face supérieure de la nappe 2 après dépôt du sable. Dans cet exemple la couche de fermeture 20 est donc constituée par le même matériau que la feuille de rétention.

Le produit ainsi obtenu est mis en forme pour constituer un ruban d'une largeur constante d'environ 350 mm.

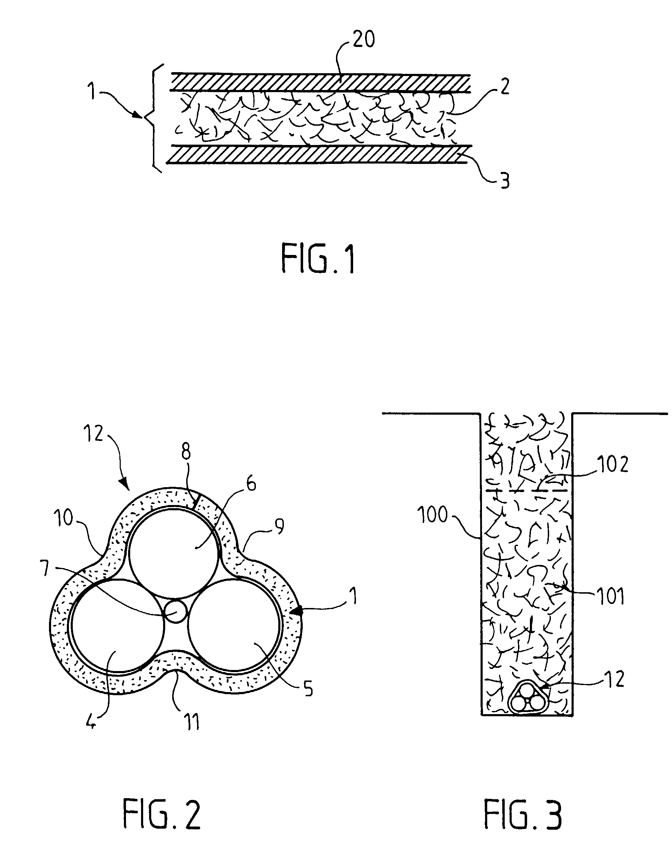

En se reportant à la figure 2, on voit une ligne de transport électrique qui compte trois câbles de phase 4, 5, 6, disposés en triangle autour d'un câble neutre 7 de plus faible section ; en général, cet ensemble de câbles est conditionné en bobines de grand diamètre ; les câbles 4 à 7 peuvent ou non être maintenus dans leur position relative représentée sur la figure 2 grâce à un torsadage, de forme hélicoïdale, de l'ensemble des câbles, de sorte qu'il est plus aisé de dérouler la bobine qui le constitue sans difficulté particulière, à la manière d'un câble unique. L'ensemble de câbles 4 à 7 est entouré d'un matériau de protection 1 formé en un ruban, dont la largeur permet d'entourer complètement l'ensemble des câbles. La souplesse du matériau 1 permet d'envelopper au maximum l'enveloppe extérieure de l'ensemble des câbles, les bords du ruban qui permet l'enveloppage étant jointifs en 8 ; des ondulations rentrantes 9, 10, 11 pénètrent, au moins partiellement, dans le creux existant entre deux câbles de phase voisins pour augmenter la surface de contact avec les câbles et améliorer ainsi le transfert thermique.

L'ensemble de câbles protégé (12) représenté sur la figure 2 est mis en place dans le sol à l'intérieur d'une tranchée 100 qui est représentée sur la figure 3. La tranchée 100 a 15 cm de largeur et 70 cm de profondeur ; l'ensemble de câbles représenté sur la figure 2 est allongé sur le fond de la tranchée ; on remplit alors la tranchée 100 avec le déblai 101 obtenu lors de la création de la tranchée 100 en interposant à une certaine distance du sol, comme cela est connu en soi, un grillage 102 avertisseur.

## Revendications

1. Matériau composite souple (1), utilisable notamment pour la protection d'objets enterrés et ayant des propriétés de transfert thermique analogues à celles du sol, caractérisé par le fait qu'il comporte :
a) une nappe (2) de non-tissé de fibres naturelles ou synthétiques ayant une épaisseur comprise entre 8 et 25 mm sous 2 kPa et un poids compris entre 500 g/m² et 2 500 500 g/m², les fibres constitutives du non-tissé ayant un diamètre compris entre 50 et 500 µm et une longueur comprise entre 10 et 100 mm ;
b) une feuille de rétention (3) constituée d'un matériau pris dans le groupe formé par :
i) un tissé de bandelettes ou de fils de 150 à 2 200 dtex, ce tissé étant constitué de fibres naturelles ou synthétiques,
ii) un non-tissé et
iii) un film,
ladite feuille de rétention ayant un poids compris entre 80 et 200 g/m² et étant fixée sur une face de ladite nappe (2) par tout moyen approprié ;
c) une charge particulaire de remplissage ayant des propriétés de transfert thermique analogues à celles du sol et ayant une dimension moyenne D de particules inférieure à 1 000 µm, D étant choisi suffisamment faible pour que la charge puisse remplir la nappe de non-tissé (2) par pénétration gravitaire à partir de sa face non recouverte par ladite feuille de rétention (3) et suffisamment grand pour qu'elle ne puisse pas, de façon significative, traverser ladite feuille de rétention (3) au cours du remplissage de ladite nappe (2) ;
d) une couche de fermeture (20) mise en place au moins du côté de la nappe (2), qui n'est pas adjacent à la feuille de rétention (3).

2. Matériau selon la revendication 1, caractérisé par le fait que la couche de fermeture est mise en place grâce à une imprégnation au moins superficielle de ladite nappe (2) au moyen d'un agent de liaison générant une liaison entre les fibres de la nappe (2) munie de sa charge de remplissage.

3. Matériau selon la revendication 1, caractérisé par le fait que la couche de fermeture (20) comporte un feuillet fibreux.

4. Matériau selon la revendication 3, caractérisé par le fait que le feuillet fibreux est constitué par une partie repliée de la feuille de rétention (3).

5. Matériau selon l'une des revendications 3 ou 4, caractérisé par le fait que le feuillet fibreux est collé sur les fibres de surface de la nappe (2).

6. Matériau selon la revendication 5, caractérisé par le fait que le collage du feuillet fibreux s'effectue grâce à un pré-encollage dudit feuillet suivi d'une application du feuillet pré-encollé sur la nappe (2) avec une légère pression et/ou un apport de chaleur.

7. Matériau selon l'une des revendications 3 à 6, caractérisé par le fait que le feuillet fibreux est choisi dans le groupe formé par un non-tissé, un tissé et un papier constitué de fibres naturelles ou synthétiques.

8. Matériau selon l'une des revendications 1 à 7, caractérisé par le fait que la charge particulaire est choisie dans le groupe formé par le sable, les silicates, les micas, les billes d'argile et les billes de verre ou leurs mélanges.

9. Matériau selon l'une des revendications 1 à 8, caractérisé par le fait que la charge particulaire contient de l'argile, du ciment ou du platre et que l'agent de liaison est de l'eau.

10. Matériau selon la revendication 2, caractérisé par le fait que l'agent de liaison est un liant choisi dans le groupe formé par le bitume ou une résine sous forme d'émulsion, la bentonite sous forme de suspension, une colle naturelle ou synthétique ou un matériau polymérisable au moyen d'un catalyseur.

11. Matériau selon l'une des revendications 1 à 10, caractérisé par le fait que la feuille de rétention (3) est fixée sur une face de la nappe (2) par aiguilletage ou collage.

12. Matériau selon l'une des revendications 1 à 11, caractérisé par le fait que la cohésion des fibres de la nappe de non-tissé (2) est assurée par aiguilletage.

13. Procédé de protection de câbles électriques enterrés, caractérisé par le fait que l'on entoure les câbles (4, 5, 6) à protéger d'un matériau selon l'une des revendications 1 à 12.

14. Ensemble (12) de câbles électriques enterrés protégé extérieurement contre les chocs au moyen d'une enveloppe, caractérisé par le fait que ladite enveloppe est constituée par un matériau (1) selon l'une des revendications 1 à 12 sous forme d'un ruban refermé autour des câbles (4, 5, 6) dans sa largeur.

## Patentansprüche

1. Biegsames Verbundmaterial (1), brauchbar vor allem zum Schutz von Gegenständen, die in der Erde verlegt sind, und mit Wärmeübertragungseigenschaften, die denjenigen des Bodens ähnlich sind, dadurch gekennzeichnet, daß es umfaßt:
a) eine Schicht (2) aus natürlichem oder synthetischen Faservlies mit einer Stärke von 8 bis 25 mm bei 2 kPa und einem Gewicht von 500 g/m² bis 2500 500 g/m², wobei die vliesbildenden Fasern einen Durchmesser von 50 bis 500 µm und eine Länge von 10 bis 100 mm aufweisen;
b) eine Rückhaltelage (3), die aus einem der folgenden Materialien besteht:
i) einem Gewebe aus Bändchen oder Fäden mit 150 bis 2000 dtex, wobei dieses Gewebe aus natürlichen oder synthetischen Fasern gebildet wird,
ii) einem Vlies und
iii) einer Folie,
wobei die Rückhaltelage ein Gewicht von 80 bis 200 g/m² aufweist und auf einer Oberfläche der Schicht (2) in beliebiger geeigneter Weise befestigt ist;
c) einen teilchenförmigen Füllstoff mit Wärmeübertragungseigenschaften, die denjenigen des Bodens ähnlich sind, und mit mittleren Teilchenabmessungen D von weniger als 1000 µm, wobei D so klein gewählt wird, daß der Füllstoff in die Schicht aus Vlies (2) ausgehend von dessen Oberfläche, die nicht durch die Rückhaltelage (3) bedeckt ist, der Schwerkraft folgend eindringen und ihn dadurch befüllen kann, und D so groß gewählt wird, daß der Füllstoff nicht in nennenswerter Weise während des Befüllens der Schicht (2) durch die Rückhaltelage (3) gelangt;
d) eine Deckschicht (20), die wenigstens auf der Seite der Schicht (2) aufgebracht ist, die nicht an die Rückhaltelage (3) grenzt.

2. Material nach Anspruch 1, dadurch gekennzeichnet, daß die Deckschicht durch eine zumindest oberflächliche Imprägnierung der Schicht (2) mit Hilfe eines Bindemittels aufgebracht wird, wobei zwischen den Fasern der mit Füllstoff beladenen Schicht (2) eine Bindung erzeugt wird.

3. Material nach Anspruch 1, dadurch gekennzeichnet, daß die Deckschicht (20) eine faserige Lage aufweist.

4. Material nach Anspruch 3, dadurch gekennzeichnet, daß die faserige Lage aus einem zurückgeschlagenen Teil der Rückhaltelage (3) gebildet wird.

5. Material nach einem der Ansprüche 3 oder 4, dadurch gekennzeichnet, daß die faserige Lage auf die Oberflächenfasern der Schicht (2) aufgeklebt ist.

6. Material nach Anspruch 5, dadurch gekennzeichnet, daß man die faserige Lage aufklebt, indem man die Lage mit Klebstoff vorbeschichtet und anschließend die mit Klebstoff vorbeschichtete Lage auf die Schicht (2) unter leichtem Druck und/oder Wärmezufuhr aufbringt.

7. Material nach einem der Ansprüche 3 bis 6, dadurch gekennzeichnet, daß die faserige Lage ausgewählt ist unter einem aus natürlichen oder synthetischen Fasern gebildeten Vlies, Gewebe und Papier.

8. Material nach einem der Ansprüche 1 bis 7, dadurch gekennzeichnet, daß der teilchenförmige Füllstoff ausgewählt ist unter Sand, Silikaten, Glimmern, Tonerdekügelchen und Glaskügelchen sowie Gemischen davon.

9. Material nach einem der Ansprüche 1 bis 8, dadurch gekennzeichnet, daß der teilchenförmige Füllstoff Tonerde, Zement oder Gips enthält und das Bindemittel Wasser ist.

10. Material nach Anspruch 2, dadurch gekennzeichnet, daß das Bindemittel ein Binder ist, der ausgewählt ist unter Bitumen oder einem Harz in Emulsionsform, Bentonit in Suspensionsform, einem natürlichen oder synthetischen Klebstoff oder einem katalytisch polymerisierbaren Material.

11. Material nach einem der Ansprüche 1 bis 10, dadurch gekennzeichnet, daß die Rückhaltelage (3) auf einer Oberfläche der Schicht (2) durch Nadelung oder Kleben befestigt ist.

12. Material nach einem der Ansprüche 1 bis 11, dadurch gekennzeichnet, daß der Zusammenhalt von Fasern der Schicht aus Vlies (2) durch Nadelung gewährleistet ist.

13. Verfahren zum Schutz elektrischer Kabel, die in der Erde verlegt sind, dadurch gekennzeichnet, daß man die zu schützenden Kabel (4, 5, 6) mit einem Material nach einem der Ansprüche 1 bis 12 umgibt.

14. Bündel (12) elektrischer Kabel, die in der Erde verlegt sind und nach außen mit Hilfe einer Ummantelung gegen Schlag geschützt sind, dadurch gekennzeichnet, daß die Ummantelung aus einem Material (1) nach einem der Ansprüche 1 bis 12 gebildet wird, das in Form eines Bandes die Kabel (4,5,6) seiner Breite nach umschließt.

## Claims

1. Flexible composite material (1) that can be used, in particular, for protecting buried objects and which have heat-transfer properties similar to those of the ground, characterized in that it comprises:
a) a nonwoven web (2) of natural or synthetic fibres with a thickness of between 8 and 25 mm under 2 kPa and a weight of between 500 g/m² and 2500 g/m², the fibres that make up the nonwoven having a diameter of between 50 and 500 µm and a length of between 10 and 100 mm;
b) a retaining sheet (3) consisting of a material taken from the group formed by:
i) a sheet woven from strips or filaments of 150 to 2200 dtex, this woven sheet consisting of natural or synthetic fibres,
ii) a nonwoven and
iii) a film,
the said retaining sheet having a weight of between 80 and 200 g/m² and being fixed to one face of the said web (2) by any appropriate means;
c) a particulate filler with heat-transfer properties similar to those of the ground and a mean particle size D of smaller than 1000 µm, D being chosen to be small enough that the filler can fill the nonwoven web (2) by penetration under gravity from that one of its faces that is not covered by the said retaining sheet (3) and large enough that it cannot pass in significant number through the said retaining sheet (3) while the said web (2) is being filled;
d) a closing layer (20) fitted to at least that side of the web (2) which is not adjacent to the retaining sheet (3).

2. Material according to Claim 1, characterized in that the closing layer is fitted by at least superficial impregnation of the said web (2) with a bonding agent, generating a bond between the fibres of the web (2) filled with its filler.

3. Material according to Claim 1, characterized in that the closing layer (20) comprises a fibrous sub-sheet.

4. Material according to Claim 3, characterized in that the fibrous sub-sheet consists of a folded-over part of the retaining sheet (3).

5. Material according to either of Claims 3 and 4, characterized in that the fibrous sub-sheet is stuck to the surface fibres of the web (2).

6. Material according to Claim 5, characterized in that the fibrous sub-sheet is stuck by pre-coating the said sub-sheet with adhesive and then applying the precoated sub-sheet onto the web (2) with slight pressure and/or the application of heat.

7. Material according to one of Claims 3 to 6, characterized in that the fibrous sub-sheet is chosen from the group formed by a nonwoven, a woven and a paper made of natural or synthetic fibres.

8. Material according to one of Claims 1 to 7, characterized in that the particulate filler is chosen from the group formed of sand, silicates, micas, clay beads and glass beads or mixtures thereof.

9. Material according to one of Claims 1 to 8, characterized in that the particulate filler contains clay, cement or plaster and that the bonding agent is water.

10. Material according to Claim 2, characterized in that the bonding agent is a binder chosen from the group formed of bitumen or a resin in the form of an emulsion, bentonite in the form of a suspension, a natural or synthetic adhesive or a material that can be polymerized using a catalyst.

11. Material according to one of Claims 1 to 10, characterized in that the retaining sheet (3) is fixed to one face of the web (2) by needle bonding or adhesive bonding.

12. Material according to one of Claims 1 to 11, characterized in that cohesion of the fibres of the nonwoven web (2) is provided by needle bonding.

13. Method of protecting buried electric cables, characterized in that the cables (4, 5, 6) to be protected are surrounded with a material according to one of Claims 1 to 12.

14. Assembly (12) comprising buried electric cables protected externally against impact by a jacket, characterized in that the said jacket consists of a material (1) according to one of Claims 1 to 12 in the form of a tape enclosing the cables (4, 5, 6), widthwise.
